(19) Europäisches Patentamt
European Patent Office
Office européen des brevets

(11) **EP 3 860 750 B1**

(12) **EUROPÄISCHE PATENTSCHRIFT**

(45) Veröffentlichungstag und Bekanntmachung des Hinweises auf die Patenterteilung:
**03.01.2024 Patentblatt 2024/01**

(21) Anmeldenummer: **19779457.1**

(22) Anmeldetag: **26.09.2019**

(51) Internationale Patentklassifikation (IPC):
***B01J 8/02*** (2006.01)

(52) Gemeinsame Patentklassifikation (CPC):
**B01J 8/025; B01J 8/0285;** B01J 2208/00132;
B01J 2208/00212; B01J 2208/00814;
B01J 2208/00884; B01J 2219/00085;
B01J 2219/2481

(86) Internationale Anmeldenummer:
**PCT/EP2019/076063**

(87) Internationale Veröffentlichungsnummer:
**WO 2020/069974 (09.04.2020 Gazette 2020/15)**

(54) **FESTBETTANORDNUNG**

FIXED BED ARRANGEMENT

DISPOSITIF DE LIT FIXE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.10.2018 DE 102018007737**

(43) Veröffentlichungstag der Anmeldung:
**11.08.2021 Patentblatt 2021/32**

(73) Patentinhaber: **Hitachi Zosen Inova AG 8005 Zürich (CH)**

(72) Erfinder:
• **MAROLD, Freimut**
  **46282 Dorsten (DE)**
• **HÜTTER, Christoph**
  **70186 Stuttgart (DE)**
• **BEEZ, Wolfgang**
  **72070 Tübingen (DE)**
• **SCHNEIDER, Adrian**
  **8953 Dietikon (CH)**

(74) Vertreter: **Leinweber & Zimmermann Patentanwalts-PartG mbB European Patent Attorneys Viktualienmarkt 8 80331 München (DE)**

(56) Entgegenhaltungen:
EP-A1- 1 300 190        EP-A1- 2 514 523
EP-A1- 3 124 909        WO-A1-95/01834
WO-A1-2012/146902    WO-A1-2017/180957
US-A- 2 768 882

EP 3 860 750 B1

**Beschreibung**

Die Erfindung betrifft eine Festbettanordnung in Form eines Einsatzes für einen Reaktor zur katalytischen Umsetzung von Reaktionsmedien, insbesondere zur katalytischen Methanisierung eines Wasserstoff und Kohlendioxid aufweisenden Gasgemisches, mit einem sich entlang einer axialen Richtung innerhalb einer Außenhülle erstreckenden, im Reaktorbetrieb von Reaktionsmedien durchströmten Aufnahmeraum zur Aufnahme eines Katalysatormaterials und einer Wärmetauscheranordnung mit einem von dem Aufnahmeraum räumlich getrennten Fluidströmungsweg für ein Temperierungsfluid zum Ab- und Zuführen von Wärme an/in den Prozess sowie einen Reaktor zur katalytischen Umsetzung von Reaktionsmedien, insbesondere zur katalytischen Methanisierung eines Wasserstoff und Kohlendioxid aufweisenden Gasgemisches, mit einem Druckraum zur Aufnahme von Reaktionsmedien und einer solchen in den Druckraum eingesetzten Festbettanordnung.

Eine Festbettanordnung mit den oben genannten Merkmalen ist aus dem Stand der Technik, beispielsweise aus der DE 197 54 185 C1 bekannt, und findet beispielsweise bei Reaktorsystemen Anwendung, mit denen ein Methanisierungsverfahren durchführbar ist. Bei einem derartigen Verfahren wird ein Reaktionsmedium in Form eines Eduktgases, das Wasserstoff und Kohlendioxid in im Wesentlichen für die Methanherstellung passenden stöchiometrischen Verhältnis enthält, und darüber hinaus ggf. noch Anteile an Kohlenmonoxid, Methan, anderen Kohlenwasserstoffen sowie Verunreinigungen in Form diverser Minorkomponenten und Inertgasen (z.B. $N_2$) aufweisen kann, unter einer vorgegebenen Temperatur und einem vorgegebenen Druck in einen Druckbehälter des Reaktors eingeführt. In dem Druckraum ist ein Einsatz mit einer in einem Aufnahmeraum angeordneten Festbettanordnung (Festbettkatalysator) vorgesehen, welche die folgenden in Summe $CH_4$ bildenden Prozesse unterstützt:

1. $CO + H_2O \leftrightarrow CO_2 + H_2$, die sogenannte watergas shift reaction

2. $CO + 3\,H_2 \leftrightarrow CH_4 + 4\,H_2O$, die CO-Methanisierung und

3. $CO_2 + 4\,H_2 \leftrightarrow CH_4 + 2\,H_2O$, die $CO_2$-Methanisierung

Das Katalysatormaterial, wie beispielsweise Ruthenium, Platin oder Nickel, wird dabei von dem Reaktionsmedium durchströmt.

Während der in dem Aufnahmeraum stattfindenden Reaktion muss ein beträchtlicher Teil der Reaktionswärme abgeführt werden. Dazu weist die Festbettanordnung eine Wärmetauscheranordnung auf. In dieser ist ein zur Aufnahme eines geeigneten Temperierungsfluids ausgebildeter Fluidströmungsweg vorgesehen. Die Führung des Temperierungsfluids und die Führung des Reaktionsmediums kann dabei beispielsweise im Gegenstromverfahren erfolgen.

Bei der in der DE 197 54 185 C1 offenbarten Festbettanordnung muss die Wärmetauscheranordnung und somit die Festbettanordnung jedoch an die Innenwand des Druckbehälters des Reaktors angepasst werden. Eine solche Anpassung ist aber bei einem bei diesen Drücken üblicherweise zylinderförmig ausgebildeten Druckbehälter fertigungstechnisch aufwendig und somit kostenaufwendig.

Um das System aus Festbettanordnung und Druckbehälter des Reaktors zu vereinfachen, ist in der EP 0 995 491 B1 ein Reaktor mit einer Wärmetauscheranordnung bestehend aus einem Plattenpaket mit einer Einhausung offenbart, wobei das eingehauste Plattenpaket umfangseitig (bezüglich der Strömungsrichtung) anpassungsfrei in den Druckbehälter eingesetzt ist. Dadurch wird der Einbau der Wärmetauscheranordnung unabhängig von der Form des Druckbehälters vereinfacht.

Mit der in EP 0 995 491 B1 offenbarten Festbettanordnung ist somit eine weitergehende Verbesserung gegenüber dem in der DE 197 54 185 C1 offenbarten Reaktor erzielt.

Festbettanordnungen und Reaktoren mit Festbettanordnungen sind beispielsweise auch in der WO 95/01834 A1, der WO 2017/180957 A1, der EP 3 124 909 A1, der WO 2012/146902 A1 und der EP 2 514 523 A1 offenbart. Bei der in der EP 1 300 190 A1 offenbarten Festbettanordnung in Form eines Einsatzes ist eine Wärmetauscheranordnung vollständig innerhalb der Außenhülle des Einsatzes angeordnet.

Es ist ein Ziel der vorliegenden Erfindung, eine nochmals weitere Verbesserung herkömmlicher Festbettanordnungen und herkömmlicher Reaktoren mit einer Festbettanordnung, insbesondere hinsichtlich ihrer konstruktiven Ausgestaltung, zu erreichen.

Diese Aufgabe wird durch eine Weiterbildung der eingangs genannten Festbettanordnung gelöst, die im Wesentlichen dadurch gekennzeichnet ist, dass die Außenhülle wenigstens bereichsweise durch die Wärmetauscheranordnung gebildet ist.

Die Erfindung beruht auf der Erkenntnis, dass durch die erfindungsgemäße Ausgestaltung zumindest eines Bereichs der Außenhülle durch die Wärmetauscheranordnung selbst eine erhebliche konstruktive Vereinfachung erreicht werden kann, da die sonst übliche, beispielsweise in der EP 0 995 491 B1 offenbarte Einhausung der Festbettanordnung zumindest bereichsweise entfällt. Die Wärmetauscheranordnung übernimmt dann zumindest bereichsweise die Funktion des Trägers des Katalysatormaterials. Die Außenhülle kann dabei auch überwiegend oder sogar vollständig durch die Wärmetauscheranordnung gebildet sein.

Der Einsatz kann in Form eines Hängeeinsatzes ausgebildet sein. Dadurch kann die Festbettanordnung einfach durch Einhängen in einen Reaktor mit diesem verbunden werden. Zudem erlaubt eine solche Ausgestaltung auch ein besonders einfaches Auswechseln der Festbettanordnung, beispielsweise zu Wartungs- und/oder Reparaturzwecken. Der Hängeeinsatz kann dabei passend zur Reaktorquerschnittsform ausgebildet sein und kann einen Tragring aufweisen.

Bei einer bevorzugten Ausgestaltung der Festbettanordnung kann eine Anschlussleitung an den Fluidströmungsweg wenigstens an einem axialen Ende, insbesondere an einem hängenden Ende, flexibel ausgebildet sein. Dadurch kann eine thermische Längenausdehnung der Wärmetauscheranordnung beim Betrieb des Reaktors kompensiert werden, da die Anschlussleitung sich bei einer Längenausdehnung der Reaktoranordnung mitbewegen kann. Somit werden Probleme durch Materialausdehnung bei Temperaturerhöhung vermieden.

Bei einer Ausführungsform der Erfindung kann ein axiales Ende des Einsatzes durch ein Sieb begrenzt sein. Das Sieb kann an einem in Schwererichtung unteren Ende des Einsatzes angeordnet sein. Der Festbettkatalysator kann dann auf das Sieb aufgeschüttet und von diesem getragen werden. Bevorzugt ist das Sieb dabei gegenüber dem Einsatz bewegbar. Besonders bevorzugt kann das Sieb in einer quer zur Schwererichtung verlaufenden Richtung verschiebbar, beispielsweise ausziehbar sein. Dies ermöglicht einen besonders einfachen Austausch des Katalysatormaterials.

In einer vorteilhaften Ausführungsform der Erfindung weist die Wärmetauscheranordnung mindestens eine erste Wärmetauscherplatte, insbesondere aus Thermoblech auf. Das Thermoblech kann dabei einen Bereich an der Außenhülle der Wärmetauscheranordnung bilden. Thermobleche sind als solche aus dem Stand der Technik bekannt und weisen mindestens zwei Blechplatten, vorzugsweise aus rostfreiem Stahl, auf, die an vorgegebenen Punkten zusammengeschweißt sind und unter Kissenbildung derart ausgeformt sind, dass z.B. elliptische Strömungskanäle entstehen, welche in Folge der kissenförmigen Ausbildung die Turbulenz der Strömung erhöhen und damit zu besonders günstigen Wärmeübertragungsverhältnissen führen können. Das Temperierungsfluid kann dabei durch die Strömungskanäle geführt werden. Thermobleche sind selbsttragend und ermöglichen die Konstruktion eines kompakten Wärmetauschers mit großer Heizflächendichte ohne strömungstote Zonen. Die Wärmetauscheranordnung kann beispielsweise ein Plattenpaket von Thermoblechen aufweisen.

Bevorzugt weist die Wärmetauscheranordnung mindestens eine im Wesentlichen parallel zur ersten Wärmetauscherplatte angeordnete zweite Wärmetauscherplatte auf, wobei die erste und die zweite Wärmetauscherplatte jeweils zumindest einen Bereich der Außenhülle bilden. Die zweite Wärmetauscherplatte kann als Thermoblech ausgebildet sein. Durch die parallele Anordnung der beiden Wärmetauscherplatten wird eine im Wesentlichen kastenförmige Struktur des Einsatzes erreicht. Zwischen der ersten und der zweiten Wärmetauscherplatte können in einer weiteren Ausführungsform weitere im Wesentlichen parallel zur ersten und zur zweiten Wärmetauscherplatte angeordnete Wärmetauscherplatten angeordnet sein und ein Plattenpaket bilden Alle Wärmetauscherplatten können als Thermoblech ausgebildet sein. Die Wärmetauscherplatten sind voneinander beabstandet und bilden somit den Aufnahmeraum zur Aufnahme eines Katalysatormaterials. Das Katalysatormaterial kann dann zwischen die Wärmetauscherplatten eingeschüttet werden.

Die erste und die zweite Wärmetauscherplatte können mediumsdicht miteinander verbunden sein, insbesondere durch ein U-Profil. Die erste und die zweite Wärmetauscherplatte können dabei miteinander verschweißt sein. Dadurch erhält man einen Einsatz mit einem im Wesentlichen quaderförmigen Aufbau, bei dem zwei sich gegenüberliegende Seiten des Quaders durch die Wärmetauscherplatten gebildet sind, zwei weitere Seiten des Quaders durch das U-Profil gebildet sind und zwei weitere, sich gegenüberliegende Seiten des Quaders offen sind. Die beiden offenen Seiten bilden bevorzugt das obere und das untere Ende des Einsatzes, wobei das untere Ende von einem Sieb begrenzt sein kann. Somit lassen sich besonders einfach Wärmetauscheranordnungen mit beliebigen Dimensionen entsprechend der Größe eines Druckbehälters eines Reaktors erzeugen.

Weiter betrifft die Erfindung einen Reaktor zur katalytischen Umsetzung von Reaktionsmedien, insbesondere zur katalytischen Methanisierung eines Wasserstoff und Kohlendioxid aufweisenden Gasgemisches, mit einem Druckraum zur Aufnahme von Reaktionsmedien und einer in den Druckraum eingesetzten Festbettanordnung mit den oben aufgeführten Merkmalen. Die Festbettanordnung kann dabei in den Druckraum einsetzbar und aus dem Druckraum entnehmbar sein. Bevorzugt weist der Reaktor dazu eine Einrichtung zum Einhängen der Festbettanordnung, insbesondere über einen Tragring, auf. Dies ermöglicht ein besonders einfaches Auswechseln der Festbettanordnung.

In einer bevorzugten Ausführungsform des Reaktors weist ein Mediumströmungspfad, entlang dessen im Reaktorbetrieb ein Reaktionsmedium fließt, einen durch den Aufnahmeraum der Festbettanordnung verlaufenden ersten Abschnitt und einen zwischen der Außenhülle der Festbettanordnung und einer Wandung des Druckraums verlaufenden zweiten Abschnitt auf. Bei einer solchen Ausgestaltung kann ein Eduktgas von einer Zuführung aus in den Druckbehälter eingeführt werden, wo es dann durch den in dem Aufnahmeraum des Einsatzes angeordneten Festbettkatalysator strömt. Nach Durchströmen des Katalysators tritt das Reaktionsmedium als Produktgas aus dem Aufnahmeraum der Festbettanordnung aus. Durch das in der Wärmetauscheranordnung fließende Temperierungsmedium ist das Produktgas entsprechend temperiert, beispielsweise gekühlt. Die Temperierung kann aber auch eine Erwärmung sein. Danach wird das Produktgas durch einen zweiten Abschnitt zwischen der Außenhülle der Festbettanordnung und einer Wandung des Druckraums geführt. Da die Außenhülle der Festbettanordnung zumindest bereichsweise durch die Wärmetauscheranordnung gebildet ist, kann somit eine weitere Temperierung, beispielsweise Kühlung, des Produktgases erreicht werden. Aufgrund dieses weiteren Temperierungsschrittes muss der Reaktormantel nicht für die Temperatur der Reaktion ausgelegt sein. Somit ist die Temperaturbelastung der Wandung des Druckraums auf die Temperatur des Temperierungsmediums begrenzt, wodurch die Anforderungen an die Wahl des Konstruktionsmaterials für den Druckraum reduziert werden.

In einer Ausführungsform des Reaktors kann ein Verhältnis V aus einem Flächeninhalt $F_E$ einer senkrecht zur axialen Richtung (A) verlaufenden Schnittfläche des Einsatzes und einem Flächeninhalt $F_D$ einer senkrecht zur axialen Richtung (A) verlaufenden Schnittfläche des Druckraums, $V=F_E/F_D$, die Bedingung $V<\frac{2}{\pi}$, bevorzugt V<0,5, besonders bevorzugt V<0,4 und noch weiter bevorzugt V<0,3 erfüllen.

Der Druckraum des Reaktors kann zudem entlang einer Außenseite der Wandung mit einem Isolierwerkstoff versehen werden. Dadurch kann eine Wärmeabstrahlung des Reaktors verringert werden.

Im Folgenden wird die Erfindung beispielhaft unter Bezugnahme auf die beigefügten Zeichnungen beschrieben. In den Zeichnungen zeigt

Fig. 1 eine perspektivische Ansicht eines Druckbehälters eines erfindungsgemäßen Reaktors,

Fig. 2a eine perspektivische Ansicht einer erfindungsgemäßen Festbettanordnung in Form eines Einsatzes für den in Fig. 1 gezeigten Druckbehälter,

Fig. 2b eine perspektivische Ansicht des in den Druckbehälter von Fig. 1 eingesetzten Einsatzes gemäß Fig. 2b ohne die zylinderförmige Wandung des Druckbehälters,

Fig. 3 eine schematische Schnittansicht des Druckbehälters und des darin eingesetzten Einsatzes,

Fig. 4a eine Draufsicht auf den Druckraum mit einem Tragring,

Fig. 4b eine Draufsicht auf einen Hängeeinsatz.

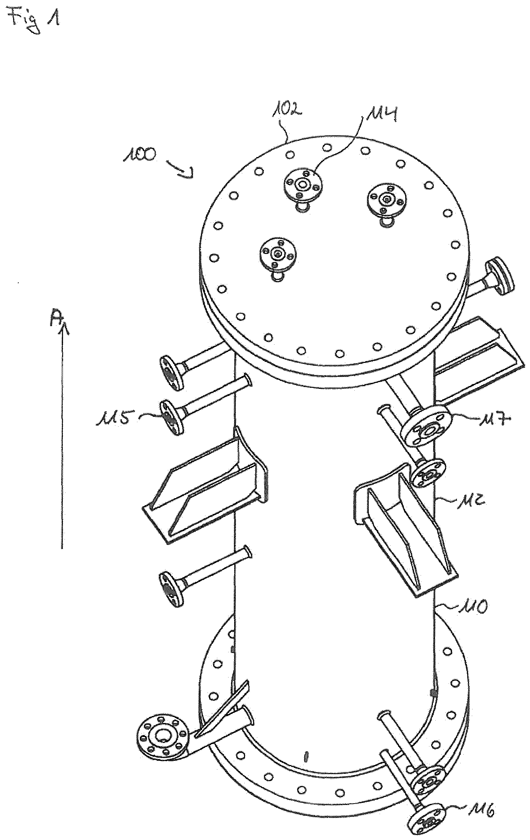

Fig. 1 zeigt eine perspektivische Ansicht eines Druckraums 110 eines Reaktors 100. Der Druckraum 110 wird von einer zylinderförmigen Wandung 112 begrenzt. Die Achse des Zylinders definiert dabei eine axiale Richtung A, die parallel zur Schwererichtung verläuft.

An einem ersten Ende (oberes Ende) ist der Druckraum 110 von einem abnehmbaren Deckel 102 verschlossen. Durch Abnahme des Deckels 102 erhält man einen Zugang zum Inneren des Druckraums 110. Die Festbettanordnung ist somit in den Druckraum 110 einsetzbar und aus diesem entnehmbar.

Weiter weist der Druckraum 110 des Reaktors verschiedene Zugänge auf. Ein Eduktgas, das beispielsweise Wasserstoff und Kohlendioxid in im Wesentlichen für die Methanherstellung passenden stöchiometrischen Verhältnissen enthält, kann durch einen Eduktgaseinlass 114 in den Druckraum 110 eingeführt werden. Nachdem das Eduktgas die später beschriebene Festbettanordnung durchströmt hat, und dort methanisiert ist, kann ein entstandenes Produktgas durch den Produktgasauslass 115 aus dem Druckraum ausströmen. Um die während der stattfindenden Reaktion entstehende Reaktionswärme abzuführen, kann ein Temperierungsfluid, beispielsweise Wasser, durch einen Temperierungsfluideinlass 116 in das Innere des Druckbehälters 110 eingeleitet werden. Nachdem das Temperierungsfluid die entstehende Wärme aufgenommen hat, kann es dann durch einen Temperierungsfluidauslass 117 aus dem Druckraum 110 ausströmen.

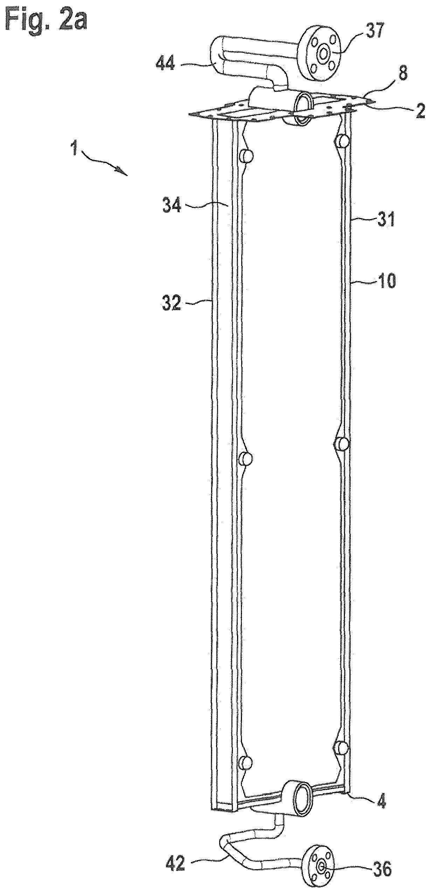

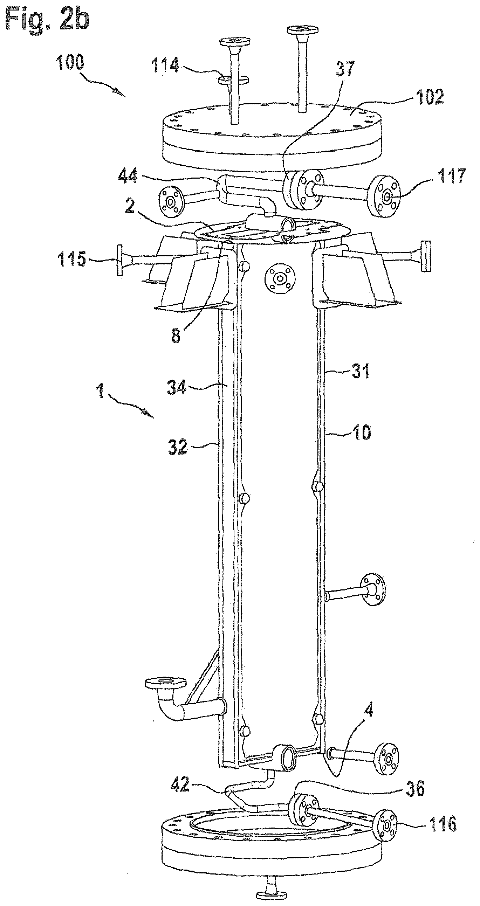

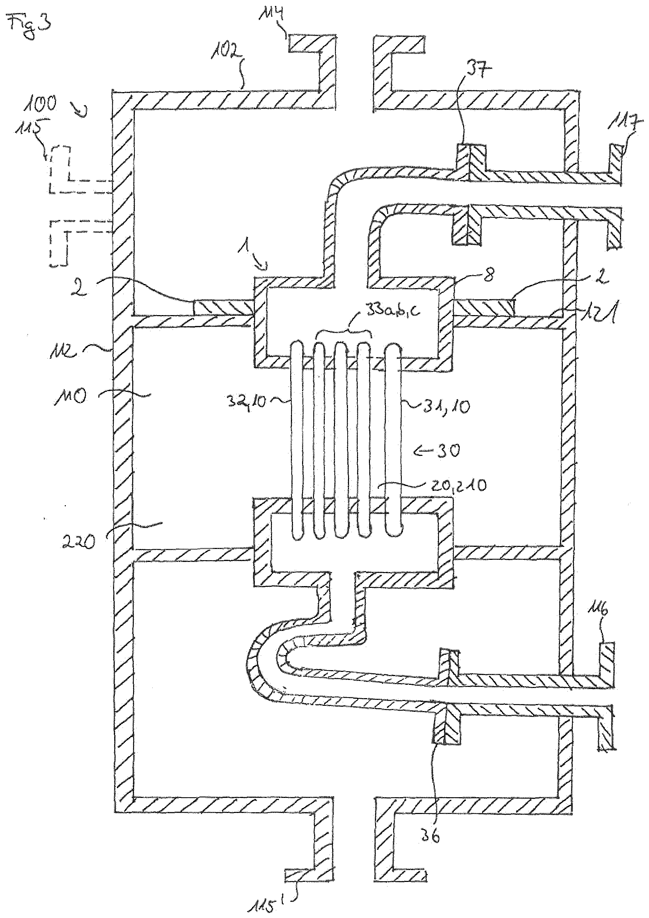

Fig. 2a zeigt eine erfindungsgemäße Festbettanordnung in Form eines Einsatzes 1 zum Einsetzen in den in Fig. 1 gezeigten Druckraum 110. Der Einsatz 1 weist eine Außenhülle 10 auf. Die Außenhülle 10 wird in dem in Fig. 2 gezeigten Ausführungsbeispiel von einer ersten Wärmetauscherplatte 31, einer in etwa parallel zur ersten Wärmetauscherplatte 31 angeordneten und von dieser beabstandeten zweiten Wärmetauscherplatte 32 und zwei die erste Wärmetauscherplatte 31 mit der zweiten Wärmetauscherplatte 32 verbindenden U-Profilen 34 gebildet. Dadurch wird ein in Fig. 3 gezeigter Aufnahmeraum 20 zur Aufnahme eines Katalysatormaterials begrenzt. An einem ersten axialen Ende 4 (unteres Ende) kann der Aufnahmeraum 20 von einem Sieb begrenzt sein. An einem dem ersten axialen Ende 4 entgegengesetzten zweiten axialen Ende 8 (oberes Ende) weist der Einsatz 1 einen ersten Tragring 2 auf, mit dem der Einsatz 1, wie später beschrieben wird, in den Druckraum 110 eingehängt werden kann.

Der Einsatz 1 weist an dem ersten axialen Ende 4 einen Temperierungsfluideinlass 36 auf. Der Temperierungsfluideinlass 36 wird mit dem Temperierungsfluideinlass 116 des Druckraums 110 in Verbindung gebracht, so dass ein Temperierungsfluid von außen über den Temperierungsfluideinlass 36 und eine Anschlussleitung 42 in den Aufnahmeraum 20 des Einsatzes 1 geleitet werden kann (siehe Fig. 2b). In einem erfindungsgemäßen Beispiel ist die Anschlussleitung 42 an dem ersten axialen Ende 4 flexibel ausgebildet. Dadurch kann die thermische Ausdehnung der Wärmetauscheranordnung beim Betrieb des Reaktors kompensiert werden. Auch an dem zweiten axialen Ende 8 weist der Einsatz eine Anschlussleitung 44 auf, die mit einem Temperierungsfluidauslass 37 in Verbindung steht. Der Temperierungsfluidauslass 37 kann mit einem Temperierungsfluidauslass 117 des Druckraums 110 in Verbindung gebracht werden (siehe Fig. 2b). Dadurch kann das Temperierungsfluid, nachdem es die bei der Reaktion entstandene Wärme aufgenommen hat, aus dem Aufnahmeraum 20 des Einsatzes 1 und aus dem Druckraum 110 des Reaktors nach außen geführt werden.

Fig. 2b zeigt den in Fig. 2a gezeigten Einsatz 1 in seinem in den Druckraum 110 des Reaktors 100 eingesetzten Zustand. In der Figur ist die zylindrische Wandung 112 (siehe Fig. 1) des Druckraums 110 nicht dargestellt.

Fig. 3 schematisch zeigt einen Querschnitt durch den oben erläuterten Druckraum 110, in den die erfindungsgemäße Festbettanordnung in Form des Einsatzes 1 eingesetzt worden ist. Der Druckraum 110 wird durch die Wandung 112 begrenzt und weist an seinem oberen Ende den abnehmbaren Deckel 102 auf. Zudem weist der Einsatz 1 die Wärmetauscheranordnung in Form von Wärmetauscherplatten 31, 32, 33a, 33b, 33c auf. Eine erste Wärmetauscherplatte 31 und eine parallel zur ersten Wärmetauscherplatte 31 angeordnete und von dieser beabstandete zweite Wärmetauscherplatte 32 bilden einen Bereich der Außenhülle 10 des Aufnahmeraums 20. Zwischen der ersten Wärmetauscherplatte 31 und der zweiten Wärmetauscherplatte 32 sind in dem dargestellten Beispiel drei weitere Wärmetauscherplatten 33a, 33b, 33c angeordnet. Die erfindungsgemäße Festbettanordnung ist jedoch nicht auf diese Ausführungsform beschränkt, sondern es kann eine beliebig geeignete Anzahl von Wärmetauscherplatten zwischen der ersten Wärmetauscherplatte 31 und der zweiten Wärmetauscherplatte 32 angeordnet sein.

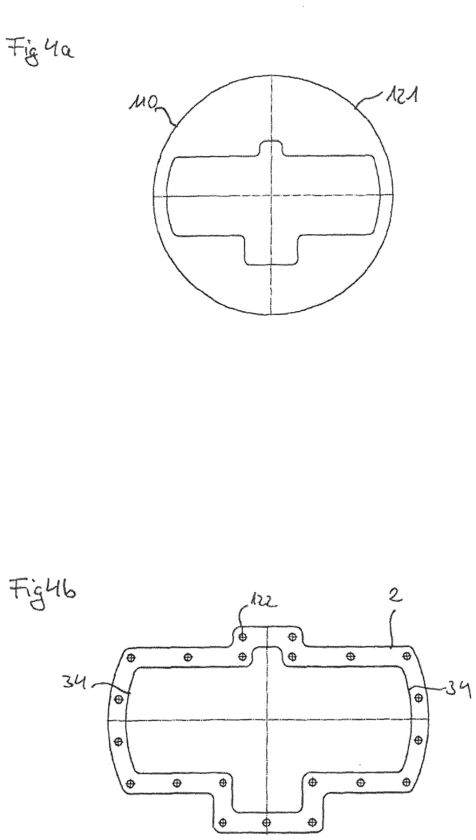

Im Betrieb des Reaktors 100 kann ein Temperierungsfluid zum Zu- und Abführen von Wärme durch den mit dem Temperierungsfluideinlass 116 des Druckraums 110 in Verbindung stehenden Temperierungsfluideinlass 36 des Einsatzes 1 zu der Wärmetauscheranordnung 30 mit den Wärmetauscherplatten 31, 32, 33a, 33b, 33c geführt werden. Das Temperierungsfluid durchströmt die Wärmetauscherplatten 31, 32, 33a, 33b, 33c ausgehend von der Seite des Temperierungsfluideinlasses 36 zu der Seite des Temperierungsfluidauslasses 37 des Einsatzes 1. Über den mit dem Temperierungsfluidauslass 37 in Verbindung stehenden Temperierungsfluidauslass 117 des Druckraums 110 kann das Temperierungsfluid den Reaktor 100 verlassen. Die erste Wärmetauscherplatte 31 und die zweite Wärmetauscherplatte 32 sind an ihren Seitenenden durch nicht dargestellte U-Profile 34 (siehe Fig. 4b) miteinander verbunden.

Im Bereich des ersten axialen Endes 4 (unteres Ende) des Einsatzes 1 ist der Einsatz 1 durch ein Sieb begrenzt, das in der Darstellung von Fig. 3 nicht zu sehen ist. Das Katalysatormaterial kann zwischen die Wärmetauscherplatten 31, 32, 33a, 33b, 33c auf das Sieb aufgeschüttet werden, welches das Katalysatormaterial trägt.

An einem zweiten axialen Ende 8 (oberes Ende) weist der Einsatz 1 einen ersten Tragring 2 auf. Der erste Tragring 2 ist komplementär zu einem zweiten Tragring 121 des Druckraums 110 ausgestaltet. Der Einsatz 1 kann somit in den Druckraum 110 eingehängt werden und ist also als Hängeeinsatz ausgebildet.

Im Betrieb des Reaktors 100 kann nun ein Reaktionsmedium, beispielsweise ein über einen Eduktgaseinlass 114 zugeführtes Eduktgas das innerhalb des Aufnahmeraums 20 angeordnete Katalysatormaterial durchströmen. Die bei der Reaktion benötigte oder abzuführende Wärme kann durch Wechselwirkung mit dem die Wärmetauscheranordnung 30 durchströmenden Temperierungsfluid zu- bzw. abgeführt werden. Das entstandene Produktgas kann den Reaktor 100 dann in einer Ausführungsform durch einen Produktgasauslass 115' verlassen.

In einer anderen Ausführungsform der Erfindung fließt das Reaktionsmedium, beispielsweise das Eduktgas, zuerst durch einen ersten Abschnitt 210 innerhalb des Aufnahmeraums 20 (d.h. durch den durch die erste Wärmetauscherplatte 31, die zweite Wärmetauscherplatte 32 und die U-Profile begrenzten Aufnahmeraum 20), und wird dann als Produktgas entlang eines zweiten Abschnitts 220, der zwischen der Außenhülle 10 der Festbettanordnung und der Wandung 112 des Druckraums 110 verläuft, zu dem anstelle des Produktgasauslasses 115' vorgesehenen Produktgasauslass 115 (siehe Fig. 1) geführt (in Fig. 3 mit gestrichelter Linie dargestellt), und verlässt dann den Druckraum 110. Das heißt, der Produktgasauslass 115' ist in dieser Ausführungsform nicht vorhanden, und stattdessen ist der Produktgasauslass 115 in der Wandung 112 des Druckraums 110 vorgesehen. Dadurch, dass die Außenhülle 10 im Bereich des zweiten Abschnitts 220 von der ersten Wärmetauscherplatte 31 und der zweiten Wärmetauscherplatte 32 zumindest bereichsweise begrenzt ist, kann das entstandene Produktgas weitere Wärme über die Wärmetauscherplatten 31, 32 der Wärmetauscheranordnung 30 austauschen. Dadurch kann eine besonders gute Temperierung des Produktgases erreicht werden.

Die Figuren 4a und 4b zeigen eine Draufsicht auf einen Hängeeinsatz mit einem ersten Tragring 2 (Fig. 4b), sowie auf einen zweiten Tragring 121 (Fig. 4a). In Fig. 4a ist der an dem Druckraum 110 ausgestaltete zweite Tragring 121 gezeigt. In diesem ist eine Aussparung in Form des Einsatzes 1 der Festbettanordnung vorgesehen, um ein Einsetzen des Einsatzes 1 zu ermöglichen. Wie in Fig. 4b zu sehen ist, weist der Einsatz 1 einen zu dem zweiten Tragring 121 komplementär ausgestalteten ersten Tragring 2 auf. Dies erlaubt es, eine mediumsdichte Verbindung zwischen dem Einsatz 1 und dem Druckraum 110 zu erreichen. Der erste Tragring 2 kann durch Befestigungsmittel, wie beispielsweise Schrauben 122 mit dem zweiten Tragring 121 verschraubt werden.

**Patentansprüche**

1. Festbettanordnung in Form eines Einsatzes (1) für einen Reaktor (100) zur katalytischen Umsetzung von Reaktionsmedien, insbesondere zur katalytischen Methanisierung eines Wasserstoff und Kohlendioxid aufweisenden Gasgemisches, mit einem sich entlang einer axialen Richtung (A) innerhalb einer Außenhülle (10) erstreckenden, im Reaktorbetrieb von den Reaktionsmedien durchströmten Aufnahmeraum (20) zur Aufnahme eines Katalysatormaterials und einer Wärmetauscheranordnung (30) mit einem von dem Aufnahmeraum (20) räumlich getrennten Fluidströmungsweg für ein Temperierungsfluid zum Ab- und Zuführen von Wärme an/in den Prozess, **dadurch gekennzeichnet, dass** die Außenhülle (10) wenigstens bereichsweise durch die Wärmetauscheranordnung (30) gebildet ist.

2. Festbettanordnung gemäß Anspruch 1, wobei der Einsatz (1) in Form eines Hängeeinsatzes ausgebildet ist.

3. Festbettanordnung gemäß Anspruch 1 oder 2, wobei eine Anschlussleitung (42) an den Fluidströmungsweg (40) wenigstens an einem axialen Ende, insbesondere an einem hängenden Ende, flexibel ausgebildet ist.

4. Festbettanordnung gemäß einem der vorangehenden Ansprüche, wobei ein erstes axiales Ende (4) des Einsatzes (1) durch ein Sieb (6) begrenzt ist.

5. Festbettanordnung gemäß Anspruch 4, wobei das Sieb (6) gegenüber dem Einsatz (1) bewegbar ist.

6. Festbettanordnung gemäß einem der vorangehenden Ansprüche, wobei die Wärmetauscheranordnung (30) mindestens eine erste Wärmetauscherplatte (31), insbesondere aus Thermoblech, aufweist.

7. Festbettanordnung gemäß Anspruch 6, wobei die Wärmetauscheranordnung (30) mindestens eine bevorzugt parallel zur ersten Wärmetauscherplatte (31) angeordnete zweite Wärmetauscherplatte (32) aufweist, und wobei die erste und die zweite Wärmetauscherplatte (31, 32) jeweils zumindest einen Bereich der Außenhülle (10) bilden.

8. Festbettanordnung gemäß Anspruch 7, wobei die erste und die zweite Wärmetauscherplatte (32) mediumsdicht miteinander verbunden sind, insbesondere durch ein U-Profil (34).

9. Reaktor zur katalytischen Umsetzung von Reaktionsmedien, insbesondere zur katalytischen Methanisierung eines Wasserstoff und Kohlendioxid aufweisenden Gasgemisches, mit einem Druckraum (110) zur Aufnahme von Reaktionsmedien und einer in den Druckraum (110) eingesetzten Festbettanordnung gemäß einem der Ansprüche 1 - 8.

10. Reaktor gemäß Anspruch 9, der eine Einrichtung zum Einhängen der Festbettanordnung, insbesondere über einen Tragring (121), aufweist.

11. Reaktor gemäß Anspruch 9 oder 10, wobei ein Mediumströmungspfad, entlang dessen im Reaktorbetrieb ein Reaktionsmedium fließt, einen durch den Aufnahmeraum (20) der Festbettanordnung verlaufenden ersten Abschnitt (210) und einen zwischen der Außenhülle (10) der Festbettanordnung und einer Wandung (112) des Druckraums (110) verlaufenden zweiten Abschnitt (220) aufweist.

12. Reaktor gemäß einem der Ansprüche 9 bis 11, wobei ein Verhältnis (V) aus einem Flächeninhalt $F_E$ einer senkrecht zur axialen Richtung (A) verlaufenden Schnittfläche des Einsatzes (1) und einem Flächeninhalt $F_D$ einer senkrecht zur axialen Richtung (A) verlaufenden Schnittfläche des Druckraums (110), $V=F_E/F_D$, die Bedingung $V<2/\pi$, bevorzugt $V<0{,}5$, besonders bevorzugt $V<0{,}4$ und noch weiter bevorzugt $V<0{,}3$ erfüllt.

**Claims**

1. A fixed bed arrangement in the form of an insert (1) for a reactor (100) for the catalytic conversion of reaction media, in particular for the catalytic methanation of a gas mixture having hydrogen and carbon dioxide, with a receiving chamber (20), which extends along an axial direction (A) within an outer sleeve (10), and through which the reaction media flow during the reactor operation, for receiving a catalyst material and a heat exchanger arrangement (30) having a fluid flow path for a temperature control fluid, which fluid flow path is spatially separated from the receiving chamber (20), for removing and supplying heat to/into the process, **characterized in that** the outer sleeve (10) is formed, at least in regions, by the heat exchanger arrangement (30).

2. A fixed bed arrangement according to claim 1, wherein the insert (1) is designed in the form of a hanging insert.

3. A fixed bed arrangement according to claim 1 or 2, wherein a connection line (42) to the fluid flow path (40) is formed in a flexible manner, at least at an axial end, in particular at a hanging end.

4. A fixed bed arrangement according to any one of the preceding claims, wherein a first axial end (4) of the insert (1) is limited by a sieve (6).

5. A fixed bed arrangement according to claim 4, wherein the sieve (6) is movable relative to the insert (1).

6. A fixed bed arrangement according to any one of the preceding claims, wherein the heat exchanger arrangement (30) has at least one first heat exchanger plate (31), in particular made of thermal plate.

7. A fixed bed arrangement according to claim 6, wherein the heat exchanger arrangement (30) has at least one second heat exchanger plate (32), which is arranged preferably parallel to the first heat exchanger plate (31), and wherein the first and the second heat exchanger plates (31, 32) each form at least one region of the outer sleeve (10).

8. A fixed bed arrangement according to claim 7, wherein the first and the second heat exchanger plates (32) are connected to one another in a medium-tight manner, in particular by a U-profile (34).

9. A reactor for the catalytic conversion of reaction media, in particular for the catalytic methanation of a gas mixture having hydrogen and carbon dioxide, with a pressure chamber (110) for receiving reaction media and a fixed bed arrangement according to any one of claims 1 - 8 which is inserted into the pressure chamber (110).

10. A reactor according to claim 9, which has a device for hanging in the fixed bed arrangement, in particular via a support ring (121).

11. A reactor according to claim 9 or 10, wherein a medium flow path, along which a reaction medium flows during reactor operation, has a first section (210) running through the receiving chamber (20) of the fixed bed arrangement and a second section (220) running between the outer sleeve (10) of the fixed bed arrangement and a wall (112) of the pressure chamber (110).

12. A reactor according to any one of claims 9 to 11, wherein a ratio (V) from a surface area $F_E$ of a cut surface of the insert (1) running perpendicular to the axial direction (A) and a surface area $F_D$ of a cut surface of the pressure chamber (110) running perpendicular to the axial direction (A), $V=F_E/F_D$, satisfies the condition $V<2/_\pi$, preferably $V<0.5$, particularly preferably $V<0.4$, and even more preferably $V<0.3$.

**Revendications**

1. Dispositif à lit fixe sous forme d'insert (1) pour réacteur (100) de conversion catalytique de fluides réactionnels, notamment pour la méthanation catalytique d'un mélange gazeux contenant de l'hydrogène et du dioxyde de carbone, le dispositif comportant : un espace de réception de matériau catalyseur (20) s'étendant dans une direction axiale (A) à l'intérieur d'une enveloppe externe (10) et traversé par les fluides réactionnels lors du fonctionnement du réacteur, et un dispositif échangeur de chaleur (30) présentant une voie d'écoulement de fluide spatialement séparée de l'espace de réception (20) et destinée à un fluide de régulation de température servant à évacuer et à fournir de la chaleur au/dans le processus, **caractérisé en ce que** l'enveloppe externe (10) est constituée au moins partiellement par le dispositif échangeur de chaleur (30).

2. Dispositif à lit fixe selon la revendication 1, dans lequel l'insert (1) est conçu sous la forme d'un insert suspendu.

3. Dispositif à lit fixe selon la revendication 1 ou 2, dans lequel une conduite de raccordement (42) à la voie d'écoulement de fluide (40) est conçue pour être flexible au moins au niveau d'une extrémité axiale, notamment au niveau d'une extrémité suspendue.

4. Dispositif à lit fixe selon l'une des revendications précédentes, dans lequel une première extrémité axiale (4) de l'insert (1) est délimitée par un tamis (6).

5. Dispositif à lit fixe selon la revendication 4, dans lequel le tamis (6) est mobile par rapport à l'insert (1).

6. Dispositif à lit fixe selon l'une des revendications précédentes, dans lequel le dispositif échangeur de chaleur (30) comporte au moins une première plaque d'échangeur de chaleur (31), notamment en tôle thermique.

7. Dispositif à lit fixe selon la revendication 6, dans lequel le dispositif échangeur de chaleur (30) comporte au moins une deuxième plaque d'échangeur de chaleur (32), de préférence parallèle à la première plaque d'échangeur de chaleur (31), et dans lequel les première et deuxième plaques d'échangeur de chaleur (31, 32) constituent chacune au moins une section de l'enveloppe externe (10).

8. Dispositif à lit fixe selon la revendication 7, dans lequel les première et deuxième plaques d'échangeur de chaleur (32) sont reliées entre elles de manière étanche aux fluides, notamment par un profilé en U (34).

**9.** Réacteur pour la conversion catalytique de fluides réactionnels, notamment pour la méthanation catalytique d'un mélange gazeux contenant de l'hydrogène et du dioxyde de carbone, comportant une chambre de pression (110) destinée à recevoir des fluides réactionnels et un dispositif à lit fixe selon l'une des revendications 1 à 8 inséré dans la chambre de pression (110).

**10.** Réacteur selon la revendication 9, présentant un organe permettant la suspension du dispositif à lit fixe, notamment par le biais d'un anneau de support (121).

**11.** Réacteur selon la revendication 9 ou 10, dans lequel une voie d'écoulement de fluide, le long de laquelle s'écoule un fluide réactionnel lors du fonctionnement du réacteur, présente une première section (210) traversant l'espace de réception (20) du dispositif à lit fixe et une deuxième section (220) située entre l'enveloppe externe (10) du dispositif à lit fixe et une paroi (112) de la chambre de pression (110).

**12.** Réacteur selon l'une des revendications 9 à 11, dans lequel un rapport (V) entre la superficie $F_E$ d'une coupe de l'insert (1) perpendiculairement à la direction axiale (A) et la superficie $F_D$ d'une coupe de la chambre de pression (110) perpendiculairement à la direction axiale (A), $V = F_E/F_D$, satisfait la condition $V < 2/\pi$, de préférence $V < 0,5$, plus particulièrement $V < 0,4$ et de manière encore plus préférable $V < 0,3$.

Fig 1

Fig. 2a

## Fig. 2b

Fig 3

Fig 4a

110        121

Fig 4b

122      2

34            34

**IN DER BESCHREIBUNG AUFGEFÜHRTE DOKUMENTE**

**In der Beschreibung aufgeführte Patentdokumente**

- DE 19754185 C1
- EP 0995491 B1
- WO 9501834 A1
- WO 2017180957 A1
- EP 3124909 A1
- WO 2012146902 A1
- EP 2514523 A1
- EP 1300190 A1